# EUROPEAN PATENT APPLICATION

(11) **EP 4 118 946 A1**
(43) Date of publication of application: **18.01.2023**
(21) Application number: 22173069.0
(22) Date of filing: 12.05.2022
(51) Int. Cl.: A01D 34/76, F16D 7/04

(54) **LAWN MOWER**

(30) Priority: 12.07.2021 IT 202100018350
(71) Applicant: MA.RI.NA Systems S.r.l., 24034 Cisano Bergamasco (IT)
(72) Inventor: RIVOLTA, Christian, 24034 CISANO BERGAMASCO (BG) (IT)
(74) Representative: Riccardi, Sergio

(57) **Abstract**

A lawn mower (1) is disclosed comprising
a frame (2);
movement means (3) connected with the frame (2), and configured to allow movement of the frame (2) on a lawn along a motion plane (3a);
cutting means (4) including at least a first blade (40) and a second blade (41), extending parallel to the motion plane (3a);
driving means (5) configured to actuate under control at least a rotary shaft (50);
transmission means (6) operatively connected with the shaft (50) and the cutting means (4), configured to move the blades (40, 41) and including:
a first pulley (60) integral with the first blade (40) and operatively connected with the frame (2) in such a way to rotate the first blade (40) on a main axis (6a) transversal to the motion plane (3a);
a second pulley (61) integral with the second blade (41) and operatively connected with the frame (2) concentrically with the first pulley (60) in such a way to rotate the second blade (41) on the main axis (6a);
a first belt (62) configured to be moved by the shaft (50), connected with the first pulley (60) and defining a first closed path, transversal to the main axis (6a);
a second belt (63) configured to be moved by the shaft (50), connected with the second pulley (61) and defining a second closed path, transversal to the main axis (6a);
the transmission means (6) further comprise a third pulley (64) operatively connected with the frame (2) in such a way to rotate on a second axis (6b) parallel to the main axis (6a);
the shaft (50) is jointly constrained, according to choice, with either the first pulley (60) or the third pulley (64);
the first belt (62) surrounds the first pulley (60) and the third pulley (64), so that the pulleys (60, 64) are enclosed in the first closed path, and rotate proportionally in the same direction; and
the second belt (63) surrounds the third pulley (64) and tangentially brushes the second pulley (61), so that the third pulley (64) is enclosed within the second closed path, the second pulley (61) being external to the second closed path, and the pulleys (61, 64) rotate proportionally in opposite directions.

## Description

The present invention relates to a lawn mower of the kind recited in the preamble of claim 1.

More particularly, the present invention relates to a lawn mower configured to be operated on a grass mantle and to cut at least portions of the grass filaments of the mantle.

As everybody knows, the lawn mower substantially is a motor-driven machine to cut the grass of a mantle, for instance of a garden or meadow, and to keep trimmed said mantle.

The lawn mower generally comprises at least a chassis, on which a motor operatively connected to a blade is mounted. The blade is surrounded at least partially by the chassis and is operatively connected with said chassis in such a way that its fulcrum falls at its centre. The blade ends are also sharpened at their final portions, and as a whole the blade may be shaped like the blade of a fan, in such a way that the cut grass may be sucked on rotation and conveyed into a removable basket.

When the removable basket is provided, it may be connected to the chamber where the blade is moved, through a conveyance duct.

When no basket is provided, the blade instead may be merely isolated in the chamber defined by the chassis.

In order to make easier the machine operation, this is preferably provided with movement means such as tracks, wheels of the like.

The machine may also comprise a handle, configured so as to allow the user to drive the machine, thus to control the direction along which the mantle is being cut.

The cutting section of the machine may additionally comprise a further blade or a conveyor.

For instance, document US-A-5012633 discloses a lawn mower comprising a blade and a conveyor for substantially rotating in the same direction with different rotation or contrarotating. To carry out the rotation in the same direction, the machine comprises an epicycloidal transmission on a set of belt connected pulleys. The mechanism transmitting rotations in the opposite direction is obtained only through an epicycloidal transmission.

Document US-A-3385043 discloses a lawn mower having a contrarotating double blade, wherein the mechanism transmitting the motion is carried out by a gearbox. Document JP-B-27671577 likewise discloses a machine having a cutting blade and a conveyor fan, both contrarotating driven by a gearbox.

The disclosed prior art has some important drawbacks.

More particularly, when planning to use configurations comprising a contrarotating double blade, it is necessary to resort to complex transmission mechanisms, such as epicycloidal transmissions, or provided with a gearbox, wherein the gears are mutually driven with a different pitch.

These mechanisms are not only complex, expensive and require additional components such as various bearings, but they are also subject to failure and in any case require a steady maintenance. Moreover, the mechanisms including a gearbox require much room, thus do not allow to produce compact lawn mowers.

In this difficult situation, the technical object of the present invention is to develop a lawn mower being substantially able to substantially prevent at least part of the abovementioned drawbacks.

In the frame of said technical object, an important object of the invention is to make a lawn mower that for a double blade cutting section includes a simple and efficient motion transmission mechanism.

Another important object of the invention is to make a lawn mower, whose maintenance is easier and less prone to failure.

The abovementioned objects and technical problems are achieved by a lawn mower as recited in the annexed claim 1. Preferred technical solutions are highlighted in the dependent claims.

The characteristics and advantages of the invention are hereinafter clarified by the detailed description of preferred embodiments of the invention, with reference to the annexed drawings, wherein:
Fig. 1 is a longitudinal sectional view of a lawn mower according to the invention;
Fig. 2 is a longitudinal sectional view of the detail of transmission means of the lawn mower of the invention; and
Fig. 3 is a bottom-up view of a lawn mower according to the invention.

In this document, measures, values, forms and geometrical references (such as verticalness and parallelism), when associated with such terms as "about" or other similar terms like "almost" or "substantially", should be understood except for measurement errors or inaccuracies due to production and/or manufacture, and above all for a slight deviation of the value, measure, form or geometrical reference associated therewith. For instance, these terms, when associated with a value, preferably mean a deviation not greater than 10% of the value.

Moreover, when used, terms such as "first", "second", "higher", "lower", "main" and "secondary" do not necessarily identify an order, a priority of relation or corresponding position, but may be merely used to distinguish different components more clearly from each other.

Unless where specified otherwise, as it will be apparent hereinafter, terms such as "treatment", "informatics", "determination", "calculation" and the like, refer to the action and/or process of a computer or similar device of electronic calculation manipulating and/or transforming data represented as physical ones, such as electronic magnitudes of an informatic system and/or memory, into other data likewise represented as physical quantities inside informatic systems, registers or other devices of storage, transmission or display of data.

The measurements and data reported in the present disclosure are to be considered, unless where otherwise stated, as carried out under the ICAO International Standard Atmosphere (ISO 2533 : 1975).

With reference now to the figures of the drawings, the lawn mower machine according to the invention, is overall shown with reference numeral 1.

Machine 1 is substantially fitted to allow trimming of a grass mantle. Therefore, the machine is configured to cut the grass filaments of the mantle when interacting therewith. In few words, machine 1 comprises a frame 2, movement means 3 and cutting means 4. Frame 2 is substantially the support structure of the components of machine 1.

Therefore, the movement means 3 are connected with the frame 2. Moreover, the movement means 3 are configured to allow the movement of frame 2 on the grass mantle. More particularly, the movement means 3 may comprise various elements, such as tracks or preferably wheels 30. Preferably, the movement means 3 comprise a plurality of wheels, for instance four or even two. Generally, the movement means 3 allow to move the frame 2 on the grass mantle along a movement plane 3a. The movement plane 3a therefore is substantially parallel to the ground on which the grass mantle is extended.

The cutting means 4 are then configured to cut at least part of the mantle filaments. To this purpose, the cutting means 4 preferably comprise at least a first blade 40 and a second blade 41. The first blade 40 and the second blade 41 are extending almost parallel to the movement plane 3a. The term "parallel" is not meaning that the blades 40, 41 are strictly and fully parallel to the movement plane 3a, but they may at the most have small inclinations with ground, thus being generally parallel with a good approximation.

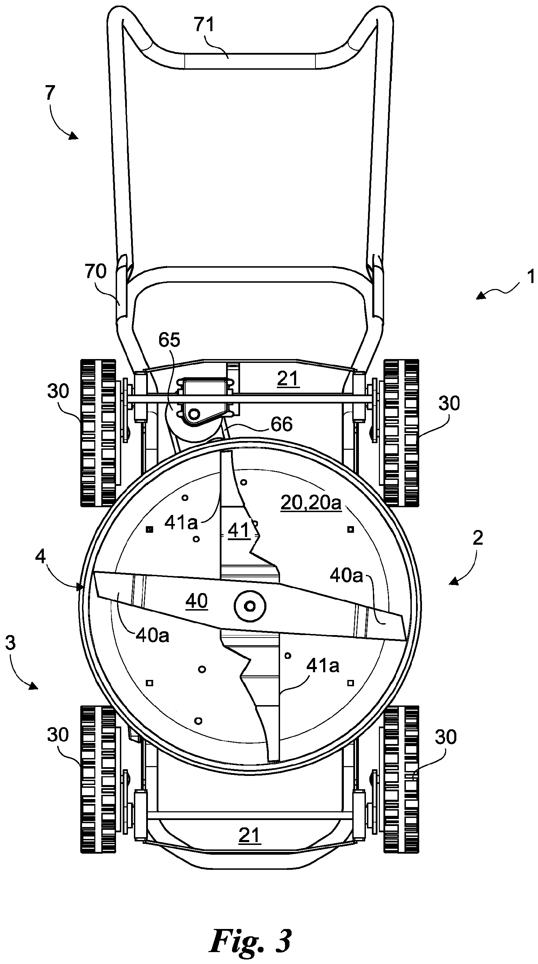

Moreover, the blades 40, 41 may define mutually different or even identical extensions. Preferably, as shown in Fig.3, the blades 40, 41 define same extensions parallel to the movement plane 3a. Thus, the first blade 40 may have some particular features. For instance, the first blade 40 may comprise two cutting portions 40a. The cutting portions 40a substantially are the cutting parts of the first blade 40. Therefore, these are preferably the free ends of the first blade 40.

The second blade 41 instead may comprise a second cutting portion 41a. Such a second cutting portion 41a may extend along the second blade 41 along its full length or its major part.

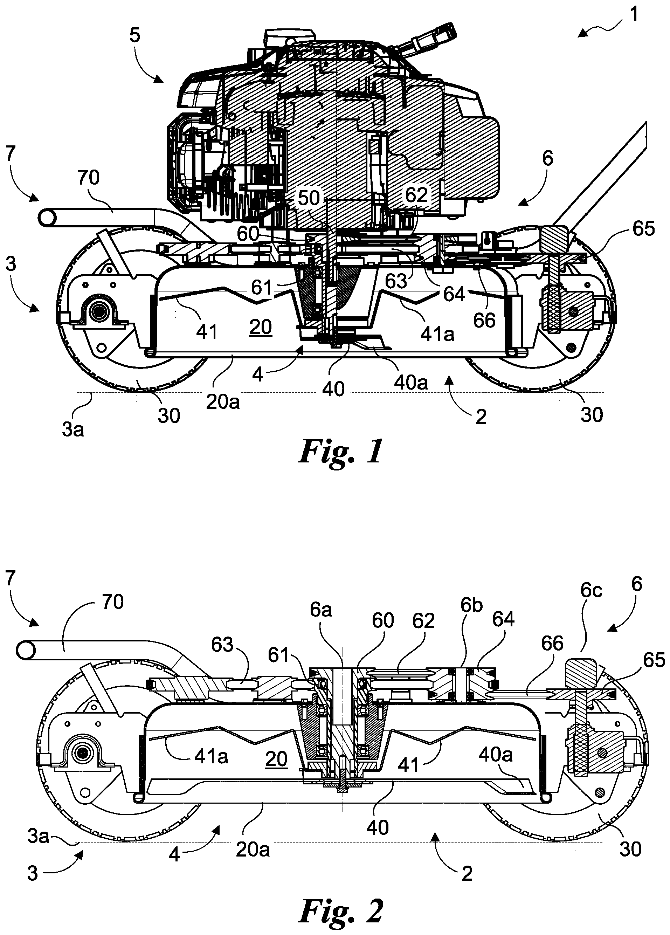

Moreover, the second cutting portion 41a has preferably a corrugated section, and may define a variable, e.g. ragged shape, having inclinations along its extension varying to the movement plane 3a, see Figs. 1-2.

Preferably, when the blades 40, 41 include the abovementioned features, the first blade 40 is arranged between the second blade 41 and the grass mantle, when the machine 1 is operative.

The frame 2 may comprise a chamber 20 containing the cutting means 4. Indeed, the chamber 20 is preferably configured to contain the blades 40, 41, so that these blades are inaccessible outside the chamber 20. Therefore, the chamber 20 may define an opening 20a. The opening 20a faces the grass mantle when the machine 1 is operative. In this way, the blades 40, 41 interact with the grass mantle through the opening 20a.

Of course, the machine 1 preferably has suitable components to actuate the cutting means 4 and/or the movement means 3. Advantageously, the machine 1 comprises also motor means 5 and transmission means 6.

The motor means 5 preferably comprise at least a rotary shaft 50. Therefore, the motor means 5 are configured for a controlled actuation of the rotary shaft 50. For instance, the motor means 5 may comprise an internal combustion engine with hand pull starter. Motor means 5 of this kind are in any case well known to an engineer in this field.

The motor means 5 may of course comprise means to control the speed of rotation of the rotary shaft 50.

The transmission means 6 are configured to move the blades 40, 41. To this purpose, the transmission means 6 advantageously comprise a set of pulleys and belts. Preferably, the transmission means 6 comprise at least a first pulley 60, a second pulley 61, a third pulley 64, a first belt 62 and a second belt 63.

The first pulley 60 is substantially integral with the first blade 40. Moreover, it is loosely connected with the frame 2, so that it may rotate around a main axis 6a. Therefore, the main axis 6a is transversal to the movement plane 3a, e.g. perpendicular to it.

The second pulley 61 is substantially integral with the second blade 41. Moreover, the second pulley 61 is loosely connected with the frame 2, concentric with the first pulley 60. Preferably, the second pulley 61 is arranged around part of the first pulley 60.

In this way, the second blade 41 may rotate around the main axis 6a, independently from the first blade 40. Preferably, the second blade 41 rotates with a speed different from the speed of the first blade 40.

The first belt 62 is configured to be moved by shaft 50, as it will be better explained hereinafter. Thus, the belt 62 is connected with the first pulley 60 and defines a first closed path transversal to the main axis 6a.

The second belt 63 is also configured to be moved by shaft 50, as it will be better explained hereinafter. The second belt 63 is connected with the second pulley 61 and defines a second closed path transversal to the main axis 6a.

The third pulley 64 is also loosely connected with the frame 2 so as to rotate around a second axis 6b. The second axis 6b is substantially parallel to the main axis 6a. The shaft 50 therefore is integrally constrained with a pulley as preferred, either the first pulley 60 or the third pulley 64. In this way, the shaft 50 can transmit its rotation to all the pulleys 60, 61, 64 of the transmission means 6. Indeed, advantageously, the first belt 62 surrounds the first pulley 60 and the third pulley 64, so that both pulleys 60, 64 are enclosed in the first closed path, and consequently may rotate proportionally in the same direction.

The second belt 63 surrounds the third pulley 64 and brushes tangentially the second pulley 61, so that the third pulley 64 is enclosed in the second closed path, while the second pulley 61 is external to said second closed path.

In this way, the pulleys 61, 64 rotate proportionally in opposite directions. Therefore, when the shaft 50 rotates, the blades 40, 41 are also proportionally rotated in opposite directions. As already mentioned, the blades 40, 41 may rotate at a variable speed, in view of the possibility of variation of the speed of the motor means 5.

The transmission means 6 may also allow to transmit the rotation of shaft 50 also to the movement means 3. In this connection, for instance the transmission means 6 may comprise a fourth pulley 65. The fourth pulley 65, like the other pulleys 60, 61, 64, is configured to actuate the movement means 3. Therefore, for instance, the fourth pulley 65 may be operatively connected to the axle of the rear wheels 30 and may transmit the rotation possibly with a predetermined gear ratio.

Moreover, the fourth pulley 65 may be expandable, thus allowing to change the speed of rotation of the cutting means 40, for instance selectively of the first blade 40 and/or the second blade 41. In any case, if the fourth pulley 65 is present, preferably it is loosely connected to frame 2, so as to rotate around a third axis 6c. This third axis 6c is preferably parallel to second axis 6b.

Then the transmission means 6 comprise a third belt 66. The third belt 66 is configured to connect at least one of the pulleys 60, 61, 64. Preferably the third belt 66 connects the fourth pulley 65 with the third pulley 64.

The transmission means therefore may be weathered, or the frame 2 may comprise one or more bonnets 21. When present, one or more bonnets 21 are configured to cover the transmission means 6, so as to make them inaccessible from outside said bonnets 21.

The machine 1 may also comprise additional elements. For instance, the machine 1 may comprise control means 7.

The control means 7 are preferably configured to allow a remote control of the machine 1, or they may comprise a support structure 70 integral with frame 2, and a handle 71. This handle may be configured to allow the user to move the frame 2 at least in one direction.

The operation of the machine 1, above described in structural terms, is substantially similar to the operation of any lawn mower now available on the market. Nevertheless, the lawn mower 1 according to the present invention attains important advantages.

Indeed, the machine 1 comprises a second blade 41 with variable section and profile allowing, by rotation in the opposite direction, to grind the material cut by the first blade 40, with a different speed and more efficient and efficacious results.

Indeed, the lawn mower 1 comprises a simple and efficient mechanism of motion transmission.

Indeed, the transmission means comprise only belts and pulleys and do not include gears or other complex elements such as gearboxes.

Moreover, maintenance of machine 1 is easier and said machine 1 is less prone to trouble in view of the simplicity of the mechanisms.

The invention is susceptible of modifications within the object of the inventive concept defined in the claims.

For instance, the cutting means 4 may comprise additional blades or other means configured for grinding, that may be configured to rotate jointly with the first blade 40 or the second blade 41.

More particularly, the transmission means 6 may be configured to move also the additional blades and/or the grinding means.

Moreover, the first blade 40 might also be a brush and the second blade 41 might be replaced by means for grinding the leaves. In any case, the blades 40, 41 are provided for cutting grass filaments and obviously the leaves on the grass mantle.

The blades 40, 41 may comprise any kind of materials, for instance metals, more particularly steel, or polymers and other means, and may have any shape.

In this connection, all the details may be replaced by equivalent means, and materials, forms and sizes may be just any.

## Claims

1. Lawn mower (1) comprising
- a frame (2);
- movement means (3) connected with said frame (2), and configured to allow movement of said frame (2) on a lawn along a motion plane (3a);
- cutting means (4) including at least a first blade (40) and a second blade (41), extending parallel to said motion plane (3a);
- driving means (5) configured to actuate under control at least a rotary shaft (50);
- transmission means (6) operatively connected with said shaft (50) and said cutting means (4), configured to move said blades (40, 41) and including:
- a first pulley (60) integral with said first blade (40) and operatively connected with said frame (2) in such a way to rotate said first blade (40) on a main axis (6a) transversal to said motion plane (3a);
- a second pulley (61) integral with said second blade (41) and operatively connected with said frame (2) concentrically with said first pulley (60) in such a way to rotate said second blade (41) on said main axis (6a);
- a first belt (62) configured to be moved by said shaft (50), connected with said first pulley (60) and defining a first closed path, transversal to said main axis (6a);
- a second belt (63) configured to be moved by said shaft (50), connected with said second pulley (61) and defining a second closed path, transversal to said main axis (6a);
and **characterized in that**
- Said transmission means (6) further comprise a third pulley (64) operatively connected with said frame (2) in such a way to rotate on a second axis (6b) parallel to said main axis (6a);
- Said shaft (50) is jointly constrained, according to choice, with either said first pulley (60) or said third pulley (64);
- Said first belt (62) surrounds said first pulley (60) and said third pulley (64), so that said pulleys (60, 64) are enclosed in said first closed path, and rotate proportionally in the same direction; and
- Said second belt (63) surrounds said third pulley (64) and tangentially brushes said second pulley (61), so that said third pulley (64) is enclosed within said second closed path, said second pulley (61) being external to said second closed path, and said pulleys (61, 64) rotate proportionally in opposite directions.

2. Lawn mower (1) according to claim 1, wherein said transmission means (6) comprise a fourth pulley (65) configured to move said movement means (3), and is operatively connected with said frame (2), so that it rotates on a third axis (6c) parallel to said second axis (6b), as well as a third belt (66), configured to connect at least one of said pulleys (60, 61, 64) with said fourth pulley (65), so that said fourth pulley (65) rotates proportionally with at least one of said pulleys (60, 61, 64).

3. Lawn mower (1) according to any of the preceding claims, wherein said frame (2) comprises a chamber (20) configured to house said blades (40, 41), so that said blades (40, 41) are inaccessible from outside of said chamber (20), and defines an opening (20a) facing, when the mower (1) is operative, said lawn, so that said blades (40, 41) interact with the lawn through said opening (20a).

4. Lawn mower (1) according to any of the preceding claims, wherein said frame (2) further comprises one or more bonnets (21) configured to cover said transmission means (6), so as to cover said transmission means (6) in such a way to make them inaccessible from outside said one or more bonnets (21).

5. Lawn mower (1) according to any of the preceding claims, wherein said movement means (3) comprise a plurality of wheels (30).

6. Lawn mower (1) according to any of the preceding claims, comprising control means (7) configured to allow a user to drive said mower (1), and including a support structure (70) integral with said frame (2), and a handle (71) so configured that said user may feel to move said frame (2) at least in one direction.

7. Lawn mower (1) according to any of the preceding claims, wherein said driving means (5) comprise an internal combustion engine with hand pull starting.

8. Lawn mower (1) according to any of the preceding claims, wherein said first blade (40) and said second blade (41) have the same extent parallel to said motion plane (3a).

9. Lawn mower (1) according to claim 8, wherein said first blade (40) comprises two first cutting portions (40a), arranged mutually spaced at the free ends of said first blade (40), and said second blade (41) comprises a second cutting portion (41a), extended along said second blade (41) and defining a ragged profile having variable inclinations along its extension, in respect of said motion plane (3a).

10. Lawn mower (1) according to claim 9, wherein said first blade (40) is arranged between said second blade (41) and said lawn, when the mower (1) is being used.
